# EUROPEAN PATENT APPLICATION

(11) **EP 4 369 625 A1**
(43) Date of publication of application: **15.05.2024**
(21) Application number: 23207967.3
(22) Date of filing: 06.11.2023
(51) Int. Cl.: H04B 7/06

(54) **HUMAN SAFETY AWARE SMART BEAMFORMING BASED ON ULTRA-WIDEBAND (UWB) RANGING AND RADAR TECHNOLOGY**

(30) Priority: 08.11.2022 US 202217983281
(71) Applicant: NXP B.V., 5656 AG Eindhoven (NL)
(72) Inventor: Muehlmann, Ulrich Andreas, 5656AG Eindhoven (NL); Schober, Michael, 5656AG Eindhoven (NL)
(74) Representative: Krott, Michel

(57) **Abstract**

Embodiments of methods and systems for wireless energy transfer are disclosed. In an embodiment, a system for wireless energy transfer includes a distributed antenna system (DAS), a ultra-wideband (UWB) device configured to evaluate human presence in an environment of the DAS, and an array controller configured to, in response to evaluating the human presence in the environment of the DAS, control beamforming of the DAS within the environment. The DAS include multiple antenna arrays.

## Description

### BACKGROUND

Wireless energy or power transfer can be used to transmit energy through electromagnetic fields. For example, wireless energy or power transfer can transmit energy through time varying electric fields, infrared or visible light waves, radio waves, microwaves, and/or magnetic fields. Wireless energy or power transfer can reduce or even eliminate the use of wires and can increase the mobility of electronic devices. For example, for distributed antenna array architectures, power can be focused within a sphere with a diameter of half a wavelength at a certain operating frequency. Focusing power in the array near-field can lead to a high power density within a focal point and a low power density outside the focal point. Using multiple distributed antenna arrays distributed in an environment (e.g., a room), the localized energy at a focal point of a distributed antenna system (DAS) can be dramatically increased, which can potentially cause harm to humans at or around the focal point.

### SUMMARY

Embodiments of systems and methods for wireless energy transfer are disclosed. In an embodiment, a system for wireless energy transfer includes a distributed antenna system (DAS), a ultra-wideband (UWB) device configured to evaluate human presence in an environment of the DAS, and an array controller configured to, in response to evaluating the human presence in the environment of the DAS, control beamforming (e.g., transmission power density, transmission direction, and/or transmission duration) of the DAS within the environment. The DAS includes multiple antenna arrays. Other embodiments are also described.

In an embodiment, the UWB device is further configured to perform a UWB radar measurement in the environment of the DAS to detect a movement in the environment based on angle of arrival (AOA) and Time of Flight (TOF) estimation of a received UWB signal.

In an embodiment, the UWB device is further configured to detect a heartbeat or breathing in the environment of the DAS by transmitting pulses and analyzing channel impulse responses (CIRs) to the pulses.

In an embodiment, the array controller is further configured to, when there is no human presence detected in the environment of the DAS, allow the DAS to direct a focal point of beams everywhere in the environment of the DAS.

In an embodiment, the array controller is further configured to, when there is human presence detected in the environment of the DAS, prohibit the DAS to direct beams to a prohibited zone in the environment of the DAS where the human presence is detected.

In an embodiment, a method for wireless energy transfer involves evaluating human presence in an environment of a DAS and in response to evaluating the human presence in the environment of the DAS, controlling beamforming of the DAS within the environment.

In an embodiment, evaluating human presence in the environment of the DAS includes performing a UWB radar measurement in the environment of the DAS to detect a movement in the environment.

In an embodiment, performing the UWB radar measurement in the environment of the DAS to detect the movement in the environment includes detecting the movement in the environment based on AOA and TOF estimation of a received UWB signal.

In an embodiment, evaluating human presence in the environment of the DAS further includes detecting a heartbeat or breathing in the environment of the DAS.

In an embodiment, detecting the heartbeat or breathing in the environment of the DAS includes transmitting pulses and analyzing CIRs to the pulses.

In an embodiment, in response to evaluating the human presence in the environment of the DAS, controlling beamforming of the DAS within the environment includes when there is no human presence detected in the environment of the DAS, allowing the DAS to direct a beams everywhere in the environment of the DAS.

In an embodiment, in response to evaluating the human presence in the environment of the DAS, controlling beamforming of the DAS within the environment further includes when there is no human presence detected in the environment of the DAS, allowing the DAS to direct a focal point of the beams everywhere in the environment of the DAS.

In an embodiment, in response to evaluating the human presence in the environment of the DAS, controlling beamforming of the DAS within the environment includes when there is human presence detected in the environment of the DAS, prohibiting the DAS to direct beams everywhere in the environment of the DAS.

In an embodiment, in response to evaluating the human presence in the environment of the DAS, controlling beamforming of the DAS within the environment includes when there is human presence detected in the environment of the DAS, prohibiting the DAS to direct beams to a prohibited zone in the environment of the DAS where the human presence is detected.

In an embodiment, the DAS includes antenna arrays.

In an embodiment, a method for wireless energy transfer involves evaluating human presence in an environment of a DAS by performing a UWB radar measurement in the environment of the DAS, where the DAS includes multiple antenna arrays, and in response to evaluating the human presence in the environment of the DAS, controlling beamforming of the DAS within the environment.

In an embodiment, evaluating the human presence in the environment of the DAS by performing the UWB radar measurement in the environment of the DAS includes performing the UWB radar measurement in the environment of the DAS to detect a movement, a heartbeat, or breathing in the environment in the environment.

In an embodiment, performing the UWB radar measurement in the environment of the DAS to detect the movement, the heartbeat, or breathing in the environment in the environment includes detecting the movement in the environment based on AOA and TOF estimation of a received UWB signal.

In an embodiment, performing the UWB radar measurement in the environment of the DAS to detect the movement, the heartbeat, or breathing in the environment in the environment further includes transmitting pulses and analyzing CIRs to the pulses.

In an embodiment, in response to evaluating the human presence in the environment of the DAS, controlling beamforming of the DAS within the environment includes when there is no human presence detected in the environment of the DAS, allowing the DAS to direct a focal point of beams everywhere in the environment of the DAS.

Other aspects in accordance with the invention will become apparent from the following detailed description, taken in conjunction with the accompanying drawings, illustrated by way of example of the principles of the invention.

### BRIEF DESCRIPTION OF THE DRAWINGS

Fig. 1 depicts an embodiment of a wireless power transfer system that includes a distributed antenna system (DAS) with an array controller, a ultra-wideband (UWB) device, and a harvesting device.
Fig. 2 depicts an embodiment of a UWB device of the wireless power transfer system depicted in Fig. 1.
Fig. 3 is a flow chart that illustrates an exemplary operation of the wireless power transfer system depicted in Fig. 1.
Fig. 4 is a process flow diagram of a method for wireless energy transfer in accordance with an embodiment of the invention.
Fig. 5 is a process flow diagram of a method for wireless energy transfer in accordance with an embodiment of the invention.

Throughout the description, similar reference numbers may be used to identify similar elements.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

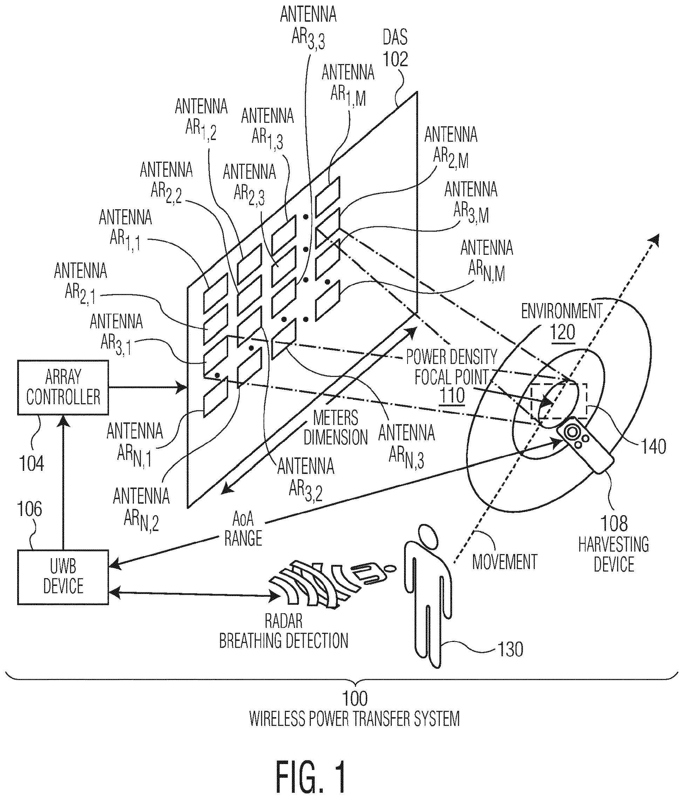

Fig. 1 depicts an embodiment of a wireless power transfer system 100 that includes a distributed antenna system (DAS) 102 with an array controller 104, a ultra-wideband (UWB) device 106, and a harvesting device 108. In an example operation of the wireless power transfer system 100 depicted in Fig. 1, the DAS 102 wirelessly transfers energy to the harvesting device 108 under the control of the array controller 104 and the UWB device 106 through electromagnetic fields. For example, the DAS 102 can transmit energy through time varying electric fields, infrared or visible light waves radio waves, microwaves, and/or magnetic fields. Although the illustrated wireless power transfer system 100 is shown with certain elements and described with certain functionality herein, other embodiments of wireless power transfer system 100 may include fewer or more elements to implement the same, less, or more functionality. For example, the wireless power transfer system 100 may include a power supply circuit configured to provide power to the DAS 102.

In the embodiment depicted in Fig. 1, the distributed antenna system (DAS) 102 incudes multiple antennas, ARi,i, ..., AR_{N,M}, which are distributed into M column(s) and N row(s), where M, N are both positive integers. The antennas, ARi,i, ..., AR_{N,M} may be divided into multiple antenna arrays. In some embodiments, each column of the antennas, ARi,i, ..., AR_{N,M} in the DAS 102 form an antenna array. For example, antennas ARi,i, AR _{2,1}, ... , ARrr,i form an antenna array while antennas AR_{1,M} AR _{2,M}, ..., AR_{N,M} form an antenna array. In some embodiments, each row of the antennas, ARi,i, ..., AR_{N,M} in the DAS 102 form an antenna array. For example, antennas AR₂₁, AR _{2,2}, ..., AR_{2,M} form an antenna array while antennas AR_{N,1}, AR_{N,2}, ..., AR_{N,M} form another antenna array. In some embodiments, the antennas, ARi,i, ..., AR_{N,M} are connected to the same power source. In some embodiments, the antennas, ARi,i, ..., AR_{N,M} are connected to different power sources. The antennas, ARi,i, ..., AR_{N,M}, may include any types of antennas, for example, dipole antenna(s), monopole antenna(s), loop antenna(s), and/or aperture antenna(s). In some embodiments, at least some of the antennas, ARi,i, ..., AR_{N,M} are physically large with phased array capabilities. In some embodiments, the DAS includes a network of spatially separated antennas ARi,i, ..., AR_{N,M} connected to a common source via a transport medium that provides wireless service within a geographic area or structure. In the DAS 102, power can be focused within a sphere with a diameter of *λ*/2, *λ* being the wavelength at an operating frequency, *f*, of the DAS 102 that has a focal point 110. At lower frequencies, and thus larger wavelength, the size of the focal point 110 as well as the apertures of receiving antennas are large. Focusing power in the array near-field can lead to a high power density within the focal point 110 and a low power density outside the focal point 110, even around the transmitting antennas. By using multiple distributed antenna arrays properly distributed in an environment (e.g., a room), these features can be used by the array controller 104 to dramatically increase the localized energy at the focal point 110 of the DAS 102, which can potentially cause harm to humans at or around the focal point 110. A theoretical boost is equal to the number (N×M) of antenna elements used in the DAS 102 compared to a single antenna solution. For instance, when the DAS 102 contains 1000 individual antennas (e.g., N is 25, M is 40), the DAS 102 can have +30dB gain at the focal point 110, boosting the available power from microwatts (µWatts) range to milliwatts (mWatts) range. Consequently, the DAS 102 enables the deployment of energy demanding wirelessly powered Internet of Things (IoTs). In contrast to the achievable gain and performance, human safety related to the high-power density at the focal point needs to be guaranteed, for example, for protection against the malfunction of a heart pacemaker, protection against pregnant women, pets, etc.

In the embodiment depicted in Fig. 1, the array controller 104 is configured to control beamforming of the DAS 102, for example, by controlling transmission power density, transmission direction, and/or transmission duration of the DAS 102. In some embodiments, the array controller 104 is configured to control the DAS 102 for human safety consideration, for example, to avoid causing harm to humans in the environment 120 of the DAS 102 because of exposure to a high power density of the DAS 102 and/or exposure to prolonged radiation. For example, the array controller 104 controls transmission power density, transmission direction, and/or transmission duration of the DAS 102 to reduce human exposure so as to avoid endangering the safety of nearby humans. Some human safety considerations may involve limiting human exposure to concentrated electromagnetic energy that may cause the malfunction of a heart pacemaker and/or that may lead to health problems such as skin damage, cancer, birth defects, and/or other illnesses or maladies. In some embodiments, the array controller 104 controls transmission power density, transmission direction, and/or transmission duration of each of the antennas, ARi,i, ..., AR_{N,M} in the DAS 102 for human safety consideration, for example, to limit human exposure to as to avoid harming any people (or other living beings) that are in the environment 120 of the DAS 102. In some embodiments, the antennas, ARi,i, ..., AR_{N,M} in the DAS 102 are divided into multiple antenna arrays and the array controller 104 is configured to control each antenna array. For example, each column of the antennas, ARi,i, ..., AR_{N,M} in the DAS 102 form an antenna array. In another examples, each row of the antennas, ARi,i, ..., AR_{N,M} in the DAS 102 form an antenna array. The DAS 102 can operate in a high power state that can potentially cause harm to human safety or in a low power state that does not produce any harmful human body exposure. In some embodiments, the array controller 104 is configured to switch the DAS 102 between the high power state and the low power state, for example, in response to human presence, for example, in or around the focal point 110 of the DAS 102. In some embodiments, the array controller 104 is configured to control the transmission intensity level of the antennas, ARi,i, ..., AR_{N,M} within the DAS 102. In some embodiments, the array controller 104 is configured to, when there is no human presence detected in the environment 120 of the DAS 102, allow the DAS 102 to direct the focal point 110 of beams everywhere in the environment 120 of the DAS 102. In some embodiments, the array controller 104 is configured to, when there is human presence detected in the environment 120 of the DAS 102, prohibit the DAS 102 to direct beams to a prohibited zone in the environment 120 of the DAS 102 where the human presence is detected . The array controller 104 may be implemented as at least one processor (e.g., a microcontroller, a digital signal processor (DSP), and/or a central processing unit (CPU)).

In the embodiment depicted in Fig. 1, the UWB device 106 is configured to evaluate human presence in the environment 120 of the DAS 102. The UWB device 106 can detect human presence and detect the location of the harvesting device 108 in the environment 120 of the DAS 102. In some embodiments, the UWB device 106 is configured to perform a radar measurement to evaluate if there is any movement in the environment. In addition, the UWB device 106 is configured to check for heartbeats and breathing. In some embodiments, the UWB device is configured to perform a UWB radar measurement in the environment 120 of the DAS 102 to detect a movement in the environment, for example, based on angle of arrival (AOA) and Time of Flight (TOF) estimation of a received UWB signal. In some embodiments, the UWB device is configured to detect a heartbeat or breathing in the environment 120 of the DAS 102 by transmitting pulses and analyzing channel impulse responses (CIRs) to the pulses. In some embodiments, when the UWB device 106 does not detect movement, heartbeat, or breathing in the environment 120 of the DAS 102, the UWB device 106 notifies the array controller 104, which allows the DAS 102 to direct its beams, and thus the focal point 110, everywhere in the environment 120 of the DAS 102. In some embodiments, when the UWB device 106 detects movement, heartbeat, or breathing in a certain area in the environment 120 of the DAS 102, the UWB device 106 creates a prohibited zone in the environment 120 of the DAS 102 (e.g., the certain area in the environment 120 of the DAS 102 is labeled as the prohibited zone), and notifies the array controller 104, which controls the DAS 102 to direct its beams and/or focal point 110 to avoid the prohibited zone for human safety requirement. In some embodiments, when the harvesting device 108 supports UWB ranging technology, the harvesting device 108 sends a beacon or performs ranging to the UWB device 106 dependent on its power state. The beacon may be only needed once before wireless entry transfer or charging is started. A beacon can be emitted when the harvesting device 108 is moved. In beacon mode, the direction can be determined, which allows the DAS 102 to align the direction versus human beings to avoid the prohibited zones.

In the embodiment depicted in Fig. 1, the harvesting device 108 is configured to harvest wireless energy transferred by the DAS 102. The harvesting device 108 may be an IoT device or other type of device. In some embodiments, the harvesting device 108 is a near field communications (NFC) device that utilizes inductive coupling to communicate. The harvesting device 108 can be implemented in at least one substrate, such as at least one semiconductor wafer. In an embodiment, the harvesting device 108 is packaged as a stand-alone integrated circuit (IC) chip. In some embodiments, the harvesting device 108 is implemented in a handheld computing system or a mobile computing system, such as a mobile phone. The harvesting device 108 may include an antenna, a transceiver (e.g., a radio frequency (RF) transmitter and receiver), and a controller (e.g., a microcontroller, a DSP, and/or a CPU). The antenna may be an induction type antenna, such as a loop antenna, or other type of antenna. In some embodiments, when the harvesting device 108 supports UWB ranging technology, the harvesting device 108 sends a beacon or performs ranging to the UWB device 106 dependent on its power state. The beacon is emitted when the harvesting device 108 is moved.

In an example operation of the wireless power transfer system 100, the UWB device 106 evaluates if there is any movement, heartbeat, or breathing in the environment 120 of the DAS 102. If there is no movement, heartbeat or breathing detected in the environment 120 of the DAS 102, the DAS 102 is allowed to direct its beams, and thus the focal point 110, everywhere in the environment 120 of the DAS 102. If there is movement, heartbeat or breathing detected in a specific area 140 in the environment 120 of the DAS 102 (for example, a person 130 moves into the specific area 140), a prohibited zone for radiation beam is created for the specific area 140 (e.g., the specific area 140 is labeled as the prohibited zone), and the DAS 102 is not allowed to charge devices in the specific area to comply with the human safety requirement. By evaluating human presence in the environment 120 of the DAS 102 and controlling beamforming (e.g., transmission power density, transmission direction, and/or transmission duration) of the DAS 102 within the environment 120 of the DAS, the DAS 102 can dynamically adjust transmission power density and/or direction based on the current human presence in the environment 120. Consequently, the DAS 102 is prevented from focusing energy to physical locations of human beings such that wireless power transfer can be conducted in a human-safe, high-power, highly-efficient manner.

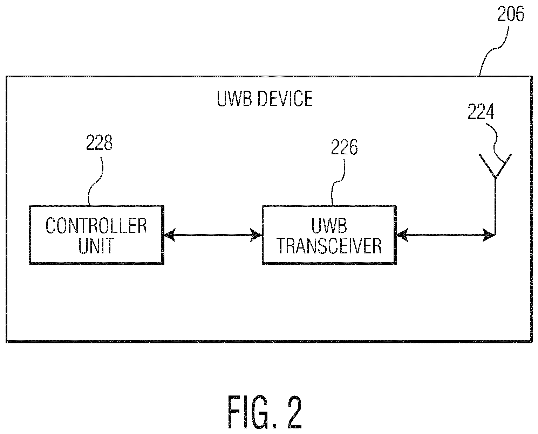

Fig. 2 depicts a UWB device 206, which is an embodiment of the UWB device 106 of the wireless power transfer system 100 depicted in Fig. 1. However, the UWB device 106 depicted in Fig. 1 is not limited to the embodiment depicted in Fig. 2. In the embodiment depicted in Fig. 2, the UWB device 206 includes a UWB antenna 224, a UWB transceiver 226, and a controller unit 228. The UWB device 206 can receive incoming UWB signals through the UWB antenna 224 and the UWB transceiver 226 and process the received UWB signals using the controller unit 228 and transmit outgoing UWB signals through the UWB transceiver 226 and the UWB antenna 224. In an embodiment, the UWB device 206 or a component of the UWB device 206 is packaged as a stand-alone IC chip. The UWB antenna 224 may be a dipole antenna, a monopole antenna, a slot antenna, or any other type of suitable antenna. Examples of the UWB antenna 224 may include, without being limited to, spherical dipoles, square plate dipoles, triangular dipoles, biconical dipoles, planar monopoles, printed monopoles, and printed wide-slot antennas. The UWB transceiver 226 may be implemented in hardware and/or firmware and may include a receiver and a transmitter. The controller unit 228 may be implemented as at least one processor (e.g., a microcontroller, a DSP, and/or a CPU). Although the UWB device 206 is shown in Fig. 2 as including certain circuit elements, in other embodiments, the UWB device 206 may include one or more additional circuit elements.

In some embodiments, the UWB device 206 (e.g., the controller unit 228) performs a UWB radar measurement in the environment 120 of the DAS 102 to detect a movement in the environment, for example, based on angle of arrival (AOA) and Time of Flight (TOF) estimation of a received UWB signal. In some embodiments, the UWB device 206 (e.g., the controller unit 228) detects a heartbeat or breathing in the environment 120 of the DAS 102 by transmitting pulses and analyzing channel impulse responses (CIRs) to the pulses. UWB ranging and radar technology can reliably detect humans approaching or entering the focal point 110 of the DAS 102 and prevent the DAS 102 from focusing energy to the physical locations of human beings. Consequently, high-power wireless energy transfer can be conducted in a human-safe and highly-efficient manner.

The UWB device 206 can perform distance and location measurements in the environment 120 of the DAS 102. In some embodiments, the UWB device 206 (e.g., the controller unit 228) performs a distance or location measurement by performing a Time of Flight (TOF) estimation of a UWB signal that is received by the UWB transceiver 226. For example, the TOF may be estimated by performing a single Sided or Double Sided Two Way ranging. In addition, by measuring the incoming angle (angle of arrival (AOA)) of the UWB signal and combining the incoming angle of the UWB signal with the TOF, the relative position of a UWB energy-harvesting device (e.g., the harvesting device 108 depicted in Fig. 1) can be estimated.

The UWB device 206 can perform heartbeat detections in the environment 120 of the DAS 102. In some embodiments, the UWB device 206 (e.g., the controller unit 228) performs a heartbeat detection by sending out periodic pulses into the environment 120 of the DAS 102 and observing multiple channel impulse responses (CIRs) over time. The heart beat may be indicated by a periodic (e.g., the heart beat period) distance change at the reflection peak caused by a person.

The UWB device 206 can perform breathing detections in the environment 120 of the DAS 102. In some embodiments, the UWB device 206 (e.g., the controller unit 228) performs a breathing detection by sending out periodic pulses into the environment 120 of the DAS 102 and observing multiple channel impulse responses over time. By analyzing the changes in the channel impulse response (CIR) over time, a periodic distance change of one of the CIR peaks with the same period can be identified as the breathing frequency.

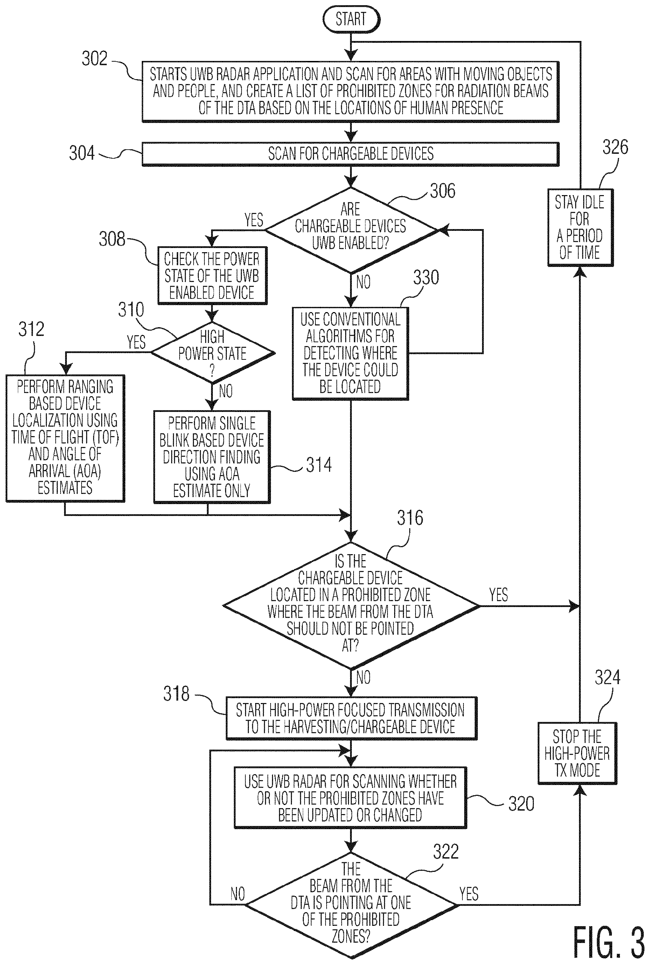

Fig. 3 is a flow chart that illustrates an exemplary operation of the wireless power transfer system 100 depicted in Fig. 1. In the exemplary operation, the DAS 102 direct its beams, and thus the focal point 110, in the environment 120, based on whether there is human movement, heartbeat or breathing detected by the UWB device 106 and the location of the harvesting device 108. At step 302, the UWB device 106 starts a UWB radar application and scans for areas with moving objects and people, and creates a list of prohibited zones for radiation beams of the DAS 102 based on the locations of human presence. At step 304, the UWB device 106 scans for harvesting/chargeable devices.

At step 306, it is determined whether or not a harvesting/chargeable device (e.g., the harvesting device 108) is UWB enabled, for example, by the UWB device 106. If the harvesting/chargeable device is UWB enabled, the UWB device 106 checks the power state in which the harvesting/chargeable device operates at step 308. It is determined whether or not the harvesting/chargeable device operates in a high power state, for example, by the UWB device 106, at step 310. In some embodiments, step 308 and step 310 are combined into a single step. If the harvesting/chargeable device is UWB enabled and operates in a high power state, the UWB device 106 performs a ranging based device localization using time of flight (TOF) and angle of arrival (AOA) estimates using, for example, a fine ranging (FiRa) Double Sided Two Way Ranging (DS-TWR) protocol, at step 312. If the harvesting/chargeable device is UWB enabled and does not operate in a high power state, the UWB device 106 performs a single blink based device direction finding using AOA estimate only using, for example, a FiRa Uplink time difference of arrival (UL-TDOA) protocol at step 314. If the harvesting/chargeable device is not UWB enabled, conventional algorithms are used for detecting where the harvesting/chargeable device is located (e.g., the DAS 102 can use RF based location technology for determining the location of the harvesting/chargeable device) at step 330.

After the location of the harvesting/chargeable device (e.g., the harvesting device 108) is determined, it is determined if the harvesting/chargeable device (e.g., the harvesting device 108) is located in a prohibited zone where the beam from the DAS 102 should not be pointed at in step 316. If the harvesting/chargeable device (e.g., the harvesting device 108) is not located in a prohibited zone where the beam from the DAS 102 should not be pointed, the DAS 102 operates in the high-power transmission mode and starts high-power focused transmission to the harvesting/chargeable device at step 318. At step 320, the UWB device 106 uses radar for scanning whether or not the prohibited zones have been updated or changed. At step 322, it is determined if the beam from the DAS 102 is pointing at one of the prohibited zones, for example, by the UWB device 106 or the array controller 104. If the beam from the DAS 102 is pointing at one of the prohibited zones, the DAS 102 stops to operate in the high-power transmission mode at step 324 and the operation stays idle for a period of time at step 326 and goes back to step 302. If the beam from the DAS 102 is not pointing at the prohibited zones, the operation goes back to step 320. If the harvesting/chargeable device (e.g., the harvesting device 108) is located in a prohibited zone where the beam from the DAS 102 should not be pointed, the operation stays idle for a period of time at step 326 and goes back to step 302.

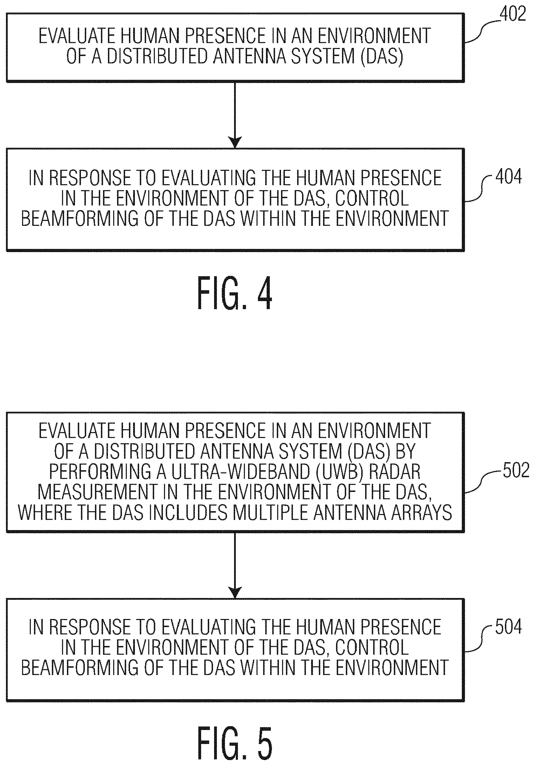

Fig. 4 is a process flow diagram of a method for wireless energy transfer in accordance with an embodiment of the invention. At block 402, human presence in an environment of a distributed antenna system (DAS) is evaluated. In some embodiments, a ultra-wideband (UWB) radar measurement is performed in the environment of the DAS to detect a movement in the environment. In some embodiments, the movement in the environment is detected based on angle of arrival (AOA) and Time of Flight (TOF) estimation of a received UWB signal. In some embodiments, a heartbeat or breathing in the environment of the DAS is detected. In some embodiments, pulses are transmitted and channel impulse responses (CIRs) to the pulses are analyzed. At block 404, in response to evaluating the human presence in the environment of the DAS, beamforming of the DAS within the environment is controlled. In some embodiments, when there is no human presence detected in the environment of the DAS, the DAS is allowed to direct beams everywhere in the environment of the DAS. In some embodiments, when there is no human presence detected in the environment of the DAS, the DAS is allowed to direct a focal point of the beams everywhere in the environment of the DAS. In some embodiments, when there is human presence detected in the environment of the DAS, the DAS is prohibited to direct beams everywhere in the environment of the DAS. In some embodiments, when there is human presence detected in the environment of the DAS, the DAS is prohibited to direct beams to a prohibited zone in the environment of the DAS where the human presence is detected. In some embodiments, the DAS includes multiple antenna arrays. The DAS may be the same or similar to the DAS 102 depicted in Fig. 1.

Fig. 5 is a process flow diagram of a method for wireless energy transfer in accordance with an embodiment of the invention. At block 502, human presence in an environment of a DAS is evaluated by performing a UWB radar measurement in the environment of the DAS, where the DAS include multiple antenna arrays. In some embodiments, the UWB radar measurement is performed in the environment of the DAS to detect a movement, a heartbeat, or breathing in the environment in the environment. In some embodiments, the movement in the environment is detected based on AOA and TOF estimation of a received UWB signal. In some embodiments, pulses are transmitted and CIRs to the pulses are analyzed. At block 504, in response to evaluating the human presence in the environment of the DAS, beamforming of the DAS within the environment is controlled. In some embodiments, when there is no human presence detected in the environment of the DAS, the DAS is allowed to direct a focal point of beams everywhere in the environment of the DAS. In some embodiments, when there is human presence detected in the environment of the DAS, the DAS is not allowed to direct a focal point of beams everywhere in the environment of the DAS. The DAS may be the same or similar to the DAS 102 depicted in Fig. 1.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations for the methods may be implemented using software instructions stored on a computer useable storage medium for execution by a computer. As an example, an embodiment of a computer program product includes a computer useable storage medium to store a computer readable program that, when executed on a computer, causes the computer to perform operations, as described herein.

The computer-useable or computer-readable medium can be an electronic, magnetic, optical, electromagnetic, infrared, or semiconductor system (or apparatus or device), or a propagation medium. Examples of a computer-readable medium include a semiconductor or solid-state memory, magnetic tape, a removable computer diskette, a random access memory (RAM), a read-only memory (ROM), a rigid magnetic disc, and an optical disc. Current examples of optical discs include a compact disc with read only memory (CD-ROM), a compact disc with read/write (CD-R/W), a digital video disc (DVD), and a Bluray disc.

In the above description, specific details of various embodiments are provided. However, some embodiments may be practiced with less than all of these specific details. In other instances, certain methods, procedures, components, structures, and/or functions are described in no more detail than to enable the various embodiments of the invention, for the sake of brevity and clarity. Although specific embodiments of the invention have been described and illustrated, the invention is not to be limited to the specific forms or arrangements of parts so described and illustrated. The scope of the invention is to be defined by the claims appended hereto and their equivalents.

## Claims

1. A system for wireless energy transfer, the system comprising:
a distributed antenna system (DAS), wherein the DAS comprises a plurality of antenna arrays;
an ultra-wideband (UWB) device configured to evaluate human presence in an environment of the DAS; and
an array controller configured to, in response to evaluating the human presence in the environment of the DAS, control beamforming of the DAS within the environment.

2. The system of claim 1, wherein the UWB device is further configured to perform a UWB radar measurement in the environment of the DAS to detect a movement in the environment based on angle of arrival (AOA) and Time of Flight (TOF) estimation of a received UWB signal.

3. The system of claim 2, wherein the UWB device is further configured to detect a heartbeat or breathing in the environment of the DAS by transmitting a plurality of pulses and analyzing a plurality of channel impulse responses (CIRs) to the pulses.

4. The system of any preceding claim, wherein the array controller is further configured to, when there is no human presence detected in the environment of the DAS, allow the DAS to direct a focal point of a plurality of beams everywhere in the environment of the DAS.

5. The system of any preceding claim, wherein the array controller is further configured to, when there is human presence detected in the environment of the DAS,
prohibit the DAS to direct a plurality of beams to a prohibited zone in the environment of the DAS where the human presence is detected.

6. A method for wireless energy transfer, the method comprising:
evaluating human presence in an environment of a distributed antenna system (DAS); and
in response to evaluating the human presence in the environment of the DAS, controlling beamforming of the DAS within the environment.

7. The method of claim 6, wherein evaluating human presence in the environment of the DAS comprises performing a ultra-wideband (UWB) radar measurement in the environment of the DAS to detect a movement in the environment.

8. The method of claim 7, wherein performing the UWB radar measurement in the environment of the DAS to detect the movement in the environment comprises detecting the movement in the environment based on angle of arrival (AOA) and Time of Flight (TOF) estimation of a received UWB signal.

9. The method of claim 7 or 8, wherein evaluating human presence in the environment of the DAS further comprises detecting a heartbeat or breathing in the environment of the DAS.

10. The method of claim 9, wherein detecting the heartbeat or breathing in the environment of the DAS comprises transmitting a plurality of pulses and analyzing a plurality of channel impulse responses (CIRs) to the pulses.

11. The method of any one of claims 6 to 10, wherein in response to evaluating the human presence in the environment of the DAS, controlling beamforming of the DAS within the environment comprises when there is no human presence detected in the environment of the DAS, allowing the DAS to direct a plurality of beams everywhere in the environment of the DAS.

12. The method of claim 11, wherein in response to evaluating the human presence in the environment of the DAS, controlling beamforming of the DAS within the environment further comprises when there is no human presence detected in the environment of the DAS, allowing the DAS to direct a focal point of the beams everywhere in the environment of the DAS.

13. The method of any one of claims 6 to 12, wherein in response to evaluating the human presence in the environment of the DAS, controlling beamforming of the DAS within the environment comprises when there is human presence detected in the environment of the DAS, prohibiting the DAS to direct a plurality of beams everywhere in the environment of the DAS.

14. The method of any one of claims 6 to 13, wherein in response to evaluating the human presence in the environment of the DAS, controlling beamforming of the DAS within the environment comprises when there is human presence detected in the environment of the DAS, prohibiting the DAS to direct a plurality of beams to a prohibited zone in the environment of the DAS where the human presence is detected.

15. The method of any one of claims 6 to 14, wherein the DAS comprises a plurality of antenna arrays.
